# EUROPEAN PATENT SPECIFICATION

(11) **EP 2 777 903 B1**
(45) Date of publication and mention of the grant of the patent: **26.07.2017**
(21) Application number: 13159543.1
(22) Date of filing: 15.03.2013
(51) Int. Cl.: B28D 5/04

(54) **ingot feeding system and method**
System zum blockzuführung und Verfahren dafür
Système et méthode d'alimentation de lingot

(43) Date of publication of application: 17.09.2014
(73) Proprietor: Toyo Advanced Technologies Co., Ltd., Minami-ku Hiroshima, 734-8501 (JP)
(72) Inventor: Schmid, Andreas, 3280 Meyriez (CH); Mittaz, Alexandre, 1076 Ferlens (CH); Mercay, Guillaume, 1008 Prilly (CH)
(74) Representative: Zimmermann & Partner Patentanwälte mbB

(56) References cited:
- WO-A1-00/47383
- WO-A1-2011/070386
- WO-A1-2012/043251
- JP-A- H09 248 754
- JP-A- 2002 113 650
- JP-A- 2010 207 978

## Description

### TECHNICAL FIELD OF THE INVENTION

The present disclosure relates to an ingot feeding system according to the preamble of claim 1 for a wire saw and to a method for feeding an ingot. Existing wire saws may be retrofitted with the ingot feeding system according to the present disclosure. The present disclosure particularly relates to multi-wire saws. Wire saws of the present disclosure are particularly adapted for cutting or sawing hard materials such as blocks of silicon or quartz, e.g., for cutting silicon wafers, for a squarer, for a cropper or the like. Further, embodiments of the present disclosure relate to a wire saw device including embodiments of the ingot feeding system described herein. Additionally, embodiments of a method for feeding an ingot during cutting are disclosed.

### BACKGROUND OF THE INVENTION

Wire saws are used for cutting blocks or bricks, thin slices, e.g., semiconductor wafers, from a piece of hard material such as silicon. In such devices, a wire is fed from a spool and is both guided and tensioned by wire guide cylinders. The wire that is used for sawing is generally provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as with diamond wire. For example, diamond particles can be provided on a metal wire with a coating, wherein the diamond particles are imbedded in the coating of the wire. Thereby, the abrasive is firmly connected with the wire.

The wire is guided and/or maintained tensioned by wire guides. These wire guides are generally covered with a layer of synthetic resin and are scored with grooves having very precise geometry and size. The wire is wound around the wire guides and forms a web or wire web. During the sawing process, the wire is moved with considerable speed. Usually, the piece to be sawed, e.g. an ingot connected to a support beam or a support holding is urged towards the web. During sawing, the piece to be sawed is moved through the wire web, wherein the speed of this movement determines the cutting speed and/or the effective cutting area that can be sawed within a given amount of time.

Generally, there is a tendency to use thinner wires in order to reduce the thickness of the cut and, thereby, to decrease the material wasted. There is also a desire to use diamond wires. These thinner wires and diamond wires are generally more susceptible to damage and, under high strain, the wires may break more easily. Further, there is a desire to increase the cutting speed for improving the throughput of wire saws. The maximum speed for moving the piece through the web and also the maximum effective cutting area within a given amount of time is limited by several factors including wire speed, feeding speed of the material to be sawed, hardness of the material to be sawed, disturbing influences, desired precision, and the like. When the speed is increased, the strain on the wire is generally increased as well. Hence, the above-mentioned issues of avoiding damage, undue wear, failure or breakage of the wire are even more critical at higher sawing speeds.

It is of utter importance to operate the wire saw in a manner so as to avoid or reduce varying sawing quality, varying sawing width, oscillations of the wire, or even breaking of the wire. In the worst case, if a break occurs, unwanted consequences may arise. The loose ends of the wire may move around in the machine in an uncontrollable manner, which might harm the wire guide system or other parts of the machine. Further, if the wire breaks and moves on, it will be torn out of the object to be sawed.

For numerous applications, wafers, or slices, are of a very small thickness relative to the cross-section, or diameter, of the ingot. The wafers thus have a substantial flexibility and can flex and curve to come into contact with adjacent slices. This flexing is undesirable for precision and flatness of cutting and can give rise to undulations, striations and undesirable irregularities on the surface of the sawed slices. These irregularities, even of several micrometers, are enough to render the slices unusable for certain applications, such as for many solar and semiconductor applications. The deformations of the slices can even lead to micro ruptures and ruptures, especially near the coupling point where the slices are connected to their support.

Still, the sawing process is subject to optimization in order to keep the costs as small as possible. Apart from avoiding inappropriate sawing quality due to, for example, varying wire properties, or even down times due to failure or breakage of the wire, the overall feed rate of the process has to be optimized in order to achieve a maximum through-put.

Known wire sawing normally includes settings with preset values for the feed rate of ingots through the web, the wire speed, the wire tension entering and exiting the web, the slurry flow-rate, and the slurry temperature. Once the cut starts, for instance, the slurry density and optionally the slurry viscosity or the slurry temperature are monitored in order to allow the operator to follow up and if necessary adapt process-related parameters. However, it turns out that this does not give sufficient information for optimizing the sawing process and irregularities during the cutting process cannot sufficiently be avoided. In particular, it is of interest that the cutting process-related parameters remain essentially constant throughout the whole cutting process in order to ensure a constant and reproducible cutting result which is essential for the production of high precision wafers. To improve cutting quality, known wire saws have been configured to detect a position of a wire portion within the piece to be sawed during sawing, e.g. by determining a bow of the wire portion with respect to a reference. Document WO 00/47383 A1 discloses an ingot feeding system according to the preamble of claim 1, and a method for feeding an ingot comprising:
a) feeding an ingot to a wire saw by use of a kinematic mechanism structure, wherein the kinematic mechanism structure is configured to enable a translational movement of the ingot within a cutting plane, wherein the cutting plane includes a cutting direction,
b) monitoring a force acting on the ingot during cutting by measuring the force in the kinematic mechanism structure,
c) controlling at least one cutting process parameter based on the monitored force.

In view of the above, it is an object of the present disclosure to provide a wire saw device that overcomes at least some of the problems in the art. This object is achieved at least to some extent by an ingot feeding system for a wire saw device and a method for feeding an ingot during cutting according to the independent claims. Further aspects, advantages, and features of the present disclosure are apparent from the dependent claims, the description, and the accompanying drawings.

### SUMMARY OF THE DISCLOSURE

In view of the above, an ingot feeding system for a wire saw device or simply a wire saw is provided. The wire saw is adapted for cutting an ingot into wafers. The ingot feeding system according to claim 1 includes a kinematic mechanism structure, at least one actuator for moving at least one part of the kinematic mechanism structure, a support table for coupling an ingot to the kinematic mechanism structure; and at least two sensors for measuring a force acting on the kinematic mechanism structure, wherein the kinematic mechanism structure is configured to enable at least one of a translational movement of the ingot within a cutting plane, wherein the cutting plane includes a cutting direction, and a rotational movement around a rotational axis which is perpendicular to the cutting plane.

According to a further aspect, an existing wire saw may be retrofitted with the ingot feeding system as described herein. A method for retrofitting a wire saw is disclosed including providing a wire saw with the ingot feeding system as described herein.

According to another aspect of the present disclosure a wire saw device including at least two wire guide cylinders and an ingot feeding system as described herein is provided.

According to the present invention a method for feeding an ingot during cutting according to claim 10 is provided, wherein the method includes: feeding an ingot to a wire saw by use of a kinematic mechanism structure, wherein the kinematic mechanism structure is configured to enable at least one of a translational movement of the ingot within a cutting plane, wherein the cutting plane includes a cutting direction, and a rotational movement around a rotational axis which is perpendicular to the cutting plane; monitoring a force acting on the ingot during cutting by measuring the force in the kinematic mechanism structure; and controlling at least one cutting process parameter based on the monitored force.

The present disclosure is also directed to an apparatus for carrying out the disclosed methods and including apparatus parts for performing each described method steps. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus.

Further aspects, advantages, and features of the present disclosure are apparent from the dependent claims, the description, and the accompanying drawings.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following: Typical embodiments are depicted in the drawings and are detailed in the description which follows. In the drawings:
- Fig. 1: shows schematically an ingot feeding system according to embodiments described herein;
- Fig. 2: shows a schematic side view of a wire saw device including an ingot feeding system according to an embodiment described herein;
- Fig. 3: shows a perspective view of an ingot disposed in a sawing region of a wire saw according to embodiments described herein;
- Fig. 4: shows a perspective view of a wire saw device including an ingot feeding system according to a further embodiment described herein;
- Fig. 5: shows a side view of a wire saw device including an ingot feeding system according to a further embodiment described herein;
- Fig. 6: shows a side view of a wire saw device including an ingot feeding system according to a yet further embodiment described herein;
- Fig. 7: shows a perspective view of a wire saw device including an ingot feeding system according to a further embodiment described herein;
- Fig. 8: shows a perspective view of an ingot feeding system according to an embodiment
- Fig. 9: shows an embodiment of a method for feeding an ingot according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

In the following description, an "ingot feeding system", or simply "feeding system", may be understood as a system controlling the position of a piece to be sawed, e.g. an ingot. In particular, this may be done by a controller of the ingot feeding system.

Generally, a wire saw device as understood herein may be a cropper, a squarer, or a wafer cutting wire saw.

Generally, in the present disclosure the process of sawing corresponds to the process of cutting. Hence, the verb "to saw" with all adequate grammatical conjugations is used as having the same meaning as the verb "to cut" with all adequate grammatical conjugations.

In the present disclosure the term "kinematic mechanism structure" is defined as an arrangement of at least two elements, typically connecting at least two bodies, wherein the at least two elements are connected to each other such that at least one of the at least two elements is movable relative to the other element or elements of the at least two elements of the arrangement, e.g. by rotation around an articulation and/or translation along an axis.

In the present disclosure the term "parallel kinematic mechanism structure" is defined as a "kinematic mechanism structure" wherein at least one of the typically at least two bodies is connected to the "parallel kinematic mechanism structure" at two or more different locations. Thereby, a movement of one of the elements of the parallel kinematic mechanism structure typically translates into a movement of at least a part of the kinematic mechanism structure (e.g. another element of the kinematic mechanism structure).

Generally, and not limited to any specific embodiment described herein, the term "cutting plane" includes the cutting direction. Typically, the orientation of the cutting plane remains constant throughout the complete cutting process. Typically, the orientation of the cutting plane corresponds to the orientation of the wires of the wire saw.

In the present disclosure the term "cutting direction" is defined as the direction in which the cut advances during the cutting process. Typically, the cutting direction is a vertical direction.

Further, in the present disclosure the term "working area" is defined as the area spanned by the wires of a wire saw, typically a web of wires is also referred to as a layer of wires. Typically the working area is the area in which a single piece to be sawed, typically an ingot, interacts with the wires of a wire saw during cutting.

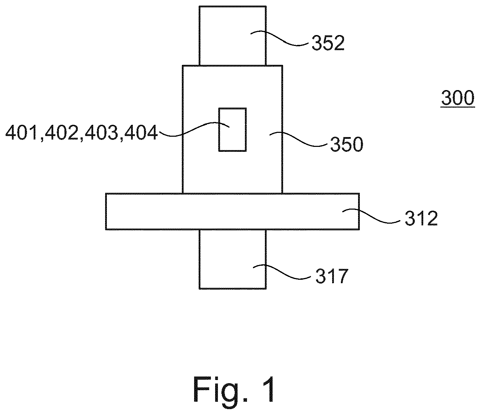

As schematically shown in Fig.1 an ingot feeding system 300 with an ingot 317 for a wire saw device 100 according to embodiments described herein includes a kinematic mechanism structure 350, at least one actuator 352 for moving at least one part of the kinematic mechanism structure 350, a support table 312 for coupling an ingot 317 to the kinematic mechanism structure 350, and at least one sensor 401 for measuring a force acting on the kinematic mechanism structure 350.

According to embodiments, the wire saw device 100 may be a multi-wire saw. A multi-wire saw allows high productivity and high quality slicing of silicon wafers for the semiconductor and photovoltaic industries. A multi-wire saw includes typically a high-strength steel wire that may be moved uni-directionally (i.e., only in the forward direction) or bi-directionally (i.e., backwards and forwards) to perform the cutting action. The wire may be provided with diamonds on its surface.

The effect of measuring the force acting on the kinematic mechanism structure of embodiments described herein is that information about the force transmitted to the ingot via the cutting wires during the cutting process can be obtained. This information may further be employed for force feedback control of cutting process parameters during cutting to ensure constant and reproducible cutting results. Therefore, typically a force based control algorithm enabling a closed loop cutting process control is used. Thereby, according to embodiments described herein, the cutting force during the complete cutting process can be controlled according to a predefined force profile, such as a function of the position of the ingot and/or the time progress of the cutting process. For example, the cutting force can be controlled such that it remains essentially constant throughout the whole cutting process. Alternatively, the cutting process may be controlled such that for example the cutting force increases or decreases as the wires of the wire saw advance through the ingot. Furthermore, according to embodiments described herein the cutting force can be controlled as a function of at least one cutting process parameter such as an ingot feeding speed, a wire speed, a wire tension, a wire temperature, a coolant supply rate, and a coolant temperature.

According to embodiments, the feeding system further includes a controller for controlling a cutting process parameter by use of a force feedback control. Further, typically the controller is also used for monitoring the force acting on the kinematic mechanism structure. Typically, the sensors for measuring a force acting on the kinematic mechanism structure of the ingot feeding system are connected to the controller. The controller typically processes the signal generated by the sensors and computes the respective force measurement data. The controller may thus be capable of performing real-time online monitoring of a force acting on the kinematic mechanism structure and thus real-time online monitoring of a force acting on the ingot during the sawing process

Typically, a control algorithm is employed to control cutting process parameters based on the force measurement data. Thereby, embodiments of the feeding system are suitable for closed loop force feed-back control of cutting process parameters such as an ingot position, an ingot orientation, an ingot feeding speed, a wire speed, a wire temperature, a wire tension, a coolant supply rate, and a coolant temperature.

According to embodiments described herein, the ingot feeding system, the wire saw and the method for feeding an ingot can be operated by means of computer programs, software, computer software products and the interrelated controllers, which can typically have a CPU, a memory, a user interface, and input and output means being in communication with the corresponding components of the wire saw including the feeding system. These components can be one or more of the components: actuators, motors or breaks of the feeding system; actuators, motors or breaks of the wire guide cylinders; coolant supply, and the like, which will be described in more detail below.

According to embodiments, the cutting process parameter includes a position of the ingot and/ or an orientation of an ingot and/ or an ingot feeding speed and/or a wire speed and/or a wire temperature and/or a wire tension and/or a coolant supply and/or a coolant temperature. Typically a control algorithm is employed to control the cutting process parameters based on the force measurement data.

Beneficial of strain gauge sensors is that they can be attached to the kinematic mechanism structure in a simple manner and at basically any site of interest.

According to embodiments the at least one actuator 352 is a motor for controlling the ingot position via the kinematic mechanism structure 350. Typically, the actuator is operated by a source of energy in the form of an electric current, hydraulic fluid pressure or pneumatic pressure converting the energy into motion. According to some embodiments, the at least one actuator of the feeding system can be an electrical motor, a linear motor, a pneumatic actuator, a hydraulic actuator or a piezoelectric actuator. Typically, the actuators are used to realize a motion of the kinematic mechanism structure, in particular a motion within the kinematic mechanism structure (e.g. by a linear motion of at least one element of the kinematic mechanism structure). Therefore, typically the rotational motion of a motor is transformed into a linear motion, for example with a bolt and screw transducer. In embodiments wherein piezoelectric actuators are used such a linear transformation is not necessary since piezoelectric actuators are intrinsically linear.

Conversion between circular and linear motion is commonly made via a screw principle or a wheel and axle principle. Screw actuators operating on the screw principle include screw jack, ball screw and roller screw actuators. By rotating an actuator's nut, a screw shaft moves along a line. Correspondingly, by moving the screw shaft, the nut rotates. Actuators operating on the wheel and axle principle include a hoist, winch, rack and pinion, chain drive, belt drive, rigid chain and rigid belt. By rotating a wheel/axle (e.g. drum, gear, pulley or shaft) a linear member (e.g. cable, rack, chain or belt) moves. Correspondingly, by moving the linear member, the wheel/axle rotates.

Typically, a single ingot 317 is mounted on the support table 312 by means of a temporary support, such as the mounting plate 376. This support table 312 can be moved vertically in the Z-direction by use of the actuator assembly 310, which may include a column 311 and a motor 315, that is adapted to urge the ingot 317 against the layer 319 of wires 323 for wafer cutting.

Typically, a strain gauge sensor is included typically made of an insulating flexible backing which supports a metallic foil pattern. Typically, the sensors are attached to the kinematic mechanism structure by a suitable adhesive, such as cyanoacrylate. During wafer cutting a force acting on the ingot is transmitted into the kinematic mechanism structure causing strain in the mechanism within the kinematic mechanism structure. This strain is typically measured by the sensors which are arranged on the elements of the kinematic mechanism structure such that a force introduced into the elements, typically along the longitudinal axes of the elements can be measured. As the object is deformed, the foil is deformed, causing its electrical resistance to change. This resistance change, typically measured using a Wheatstone bridge, is related to the strain by the quantity known as the gauge factor. A strain gauge sensor takes advantage of the physical property of electrical conductance and its dependence on the conductor's geometry. When an electrical conductor is stretched within the limits of its elasticity such that it does not break or permanently deform, it will become narrower and longer, changes that increase its electrical resistance end-to-end. Conversely, when a conductor is compressed such that it does not buckle, it will broaden and shorten causing changes that decrease its electrical resistance end-to-end. From the measured electrical resistance of the strain gauge, the amount of applied stress and strain in the kinematic mechanism structure and thus the force acting on the ingot during wafer cutting may be inferred.

According to embodiments described herein, force sensors used for measuring a force, typically in the kinematic mechanism structure, are adapted for industrial applications. Typically, the force sensors used in the embodiments are based on the technical principle as described above. According to embodiments, strain gauge sensors employed are encapsulated and can be fixed to the site of interest, e.g. to the kinematic mechanism structure, in particular to the arms of the kinematic mechanism structure, by bolts, screws or adhesives. Alternatively, other suitable force sensors which are based on a different technology as described above may be used.

In order to detect and measure the force with a high sensitivity the sensors are typically arranged at positions of the kinematic mechanism structure where the highest deformation resulting from the strain occurs as a result of the introduced force, for example in a center portion on the surfaces of the arms. Typically, the sensors are oriented such that their direction of highest measurement sensitivity corresponds to the direction of the force transmitted into the respective element of the kinematic mechanism structure, typically the longitudinal direction of the elements of the kinematic mechanism structure.

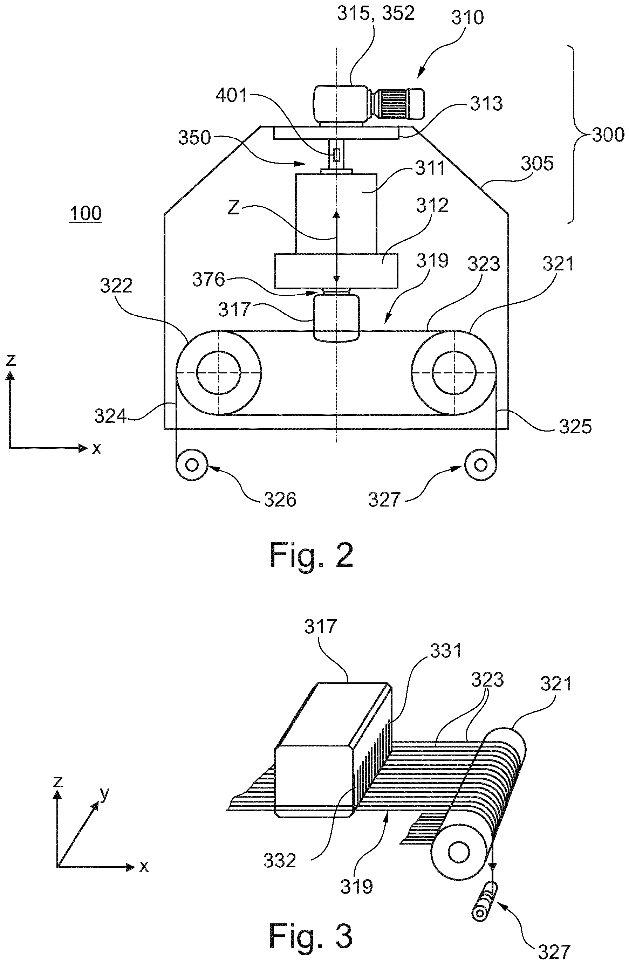

In Fig. 2 a schematic side view of an embodiment of a wire saw device 100 including an ingot feeding system 300 including a linear kinematic mechanism structure is illustrated. Typically, the wire saw device includes a wire guide 321, 322 for transporting and guiding the wire 324, 325 in a wire moving direction. The wire 323 may be wound on the wire guides, herein referred to also as guide cylinders. Normally, the guide cylinders are grooved with a constant pitch, forming a horizontal net of parallel wires or wire web, herein referred to also as a layer of wires 319. The wire guides are rotated by drives that cause the entire wire-web to move at a relatively high speed of, for instance, 5 to 20 m/s.

If desired, several high flow-rate nozzles may feed the moving wires with slurry. A slurry as understood herein refers to a liquid carrier with typically suspended abrasion particles (e.g., particles of silicon carbide). As mentioned, during the cutting action, the ingot may be pushed through the wire web. Alternatively, the ingot may be stationary while the wire web is pushed through it. A wire feed spool typically provides the required new wire and a wire take-up spool typically stores the used wire.

Generally, embodiments of the wire saw device as described herein include a frame 305, on which the wire guides 321, 322 are mounted with their rotational axes disposed parallel to each other. Further, typically an actuator assembly 310 is used to urge an ingot 317 against the layer 319 of wires 323.

As illustrated in Fig. 2, the wire 323 is received from a supply spool 326 and then wound about the wire guides 321, 322, e.g. guide cylinders, to form at least one layer 319 of parallel wires in the sawing region. The wire 323 is then returned to a suitable receiving device, such as a take-up spool 327. Typically, at least one of the guide cylinders are coupled to a drive motor that is adapted to move the wire(s) 323 disposed in the sawing region in a single direction, or, in particular, in a reciprocating motion. The wire guides 321, 322 may be supported by one or more bearings, which can be coupled to a wire tensioning system (not shown) that is adapted to provide a desired tension to the wire(s) 323 by moving one guide cylinder relative to the other. Typically, a wire saw control system may provide control of the wire tension.

In the embodiment as shown in Fig. 2, only a single ingot 317 is positioned and sawed at a time within a wire saw device 100. However, the embodiments of a single wire saw device described herein may form part of a wire saw system including a plurality of wire saw devices. Typically, two, three or four ingots are cut at the same time in different working areas.

The wire path, from loop to loop, slices one or more ingots at a working area, and is transported by the guide cylinders to further working areas, or the same working area again. Typically, the wire web slices one or more ingots at an upper working area, is then transported to the lower working area, and slices one or more ingots at the lower working area. Hereafter, the wire is normally transported back to the upper working area. In the event that the movement direction is changed during sawing, instead of being transported to the next working area, the wire might be transported back to the working area from which it arrives.

It should be understood that a wire web may contain more than one working area which is defined as an area in which a sawing process is performed. Thus, according to typical embodiments described herein, a wire web can have multiple working areas that are formed by one or several wires. For instance, according to typical embodiments described herein, the wire saw may include two horizontally oriented wire webs, for instance, including two or four horizontally oriented working areas. In this case, sawing is performed by pushing an ingot in a typically vertical direction, through the wire web defining the working area (see Fig. 3).

Fig. 3 shows a perspective view of an ingot 317 that is partially sawed due to a movement of the feeding system 300 urging the ingot 317 against the layer 319 of wire(s) 323 disposed in the sawing region of the wire saw device 100. Typically, the pitch between adjacent wires of the layer 319 of wires 323 is defined by engraved grooves on the periphery of the wire guide cylinders which determines the thickness of the sawed slices 331. The latter are separated from each other by slots or sawing gaps 332. Typically, the wire 323 may include a spring steel wire with a diameter between 0.1 and 0.2 mm so as to saw ingots of hard material, or more particularly compositions, such as silicon, ceramic, compounds of the elements of groups III-V and II-VI, GGG (gadolinium gallium garnet), sapphire, etc., in slices of desirably about 300 µm or less, or typically for next generation substrates 180 µm or less in thickness. Typically an abrasive agent is used, which generally is a commercial product, such as diamond, silicon carbide, alumina, or other useful material that is used to improve the ingot sawing process. The abrasive agent may be fixed to the wires 323, or be in a free form that is in suspension in a liquid (e.g., PEG), such as a slurry, which serves as a transport for the abrasive particles.

It is possible that sawing is undertaken at the same time at the upper working area and the lower working area. The wire saw may furthermore include two vertically arranged webs (not shown). According to some embodiments, the vertically arranged webs are used for transporting the wire between the horizontally oriented working areas. During transport between the working areas the wire can cool down. According to other embodiments, the working areas are oriented vertically.

According to embodiments described herein, the wire saw is used for cutting hard material such as semiconductor material, for example, silicon, quartz, or the like at high speed. The wire speed, that is the speed of the wire moving through the wire saw can be, for example, 10 m/s or even higher. Typically, the wire speed can be in a range of 10 to 15 m/s. However, higher wire speeds, such as of 20 m/s, 25 m/s or 30 m/s can also be desirable. According to some embodiments, the movement of the wire is only unidirectional, i.e., always in the forward direction. According to other embodiments, the movement may include a movement in the backward direction, in particular, the movement can be a back-and-forth movement of the wire in which the movement direction of the wire is amended repeatedly.

For unwinding the wire at the desired wire speed, the feed spool 326 with unused wire rotates with a rotation speed of up to several thousands rotations per minute. For example, 1000 to 2000 rpm can be provided for unwinding the wire.

In embodiments, which can be combined with other embodiments described herein, the wires may have different diameters depending on the type of device. In an embodiment pertaining to a squarer, the wire diameter may be from about 250 µm to about 450 µm, e.g., 300 µm to 350 µm. In an embodiment pertaining to a wafer cutting wire saw, the wire diameter may be from 80 µm to 180 µm, more typically from 120 µm to 140 µm.

According to a further embodiment, which can be combined with other embodiments described herein, the wire employed for cutting is a diamond wire. By using diamond wire, the throughput may be increased by a factor of 2 or even more in comparison to conventional steel wire. The speed with which the material to be sawed is moved relatively to the moving wire may be referred to as the material feed rate. The material feed rate in the embodiments described herein may be in the range of 2 µm/s to 20 µm/s, typically about 6 µm/s to 10 µm/s for a wafer cutting wire saw, respectively from 10 µm/s to 50 µm/s, typically from 28 µm/s to 36 µm/s for embodiments pertaining to a squarer. Alternatively, the material feed rate in the embodiments described herein may be above 20 µm/s for a wafer cutting wire saw, respectively above 50 µm/s for embodiments pertaining to a squarer.

Normally, after traveling through the entire wire saw, the wire exits the operation area of the wire saw at a diameter reduced in comparison to its initial diameter before the sawing process. The wear in wire is process dependent. In particular, the higher the cut rate, the higher the resulting temperature, the higher the wire wear. Additionally, the wire is heated inside the ingots where the abrasion takes place during sawing, that is, typically inside the wafers. Thus, the wire heats up while cutting the ingot. Outside the ingot, the wire cools down by exchanging heat with its surroundings such as the slurry, air, and the guide cylinders or further wire guides. Consequently, as the diameter of the cutting wire and thus its mechanical properties change during the cutting process as a function of time and temperature, the cutting force acting on the ingot by the wire and therefor the abrasion property of the wire changes during the cutting process resulting in undesirable inhomogeneous cutting surfaces of the ingot.

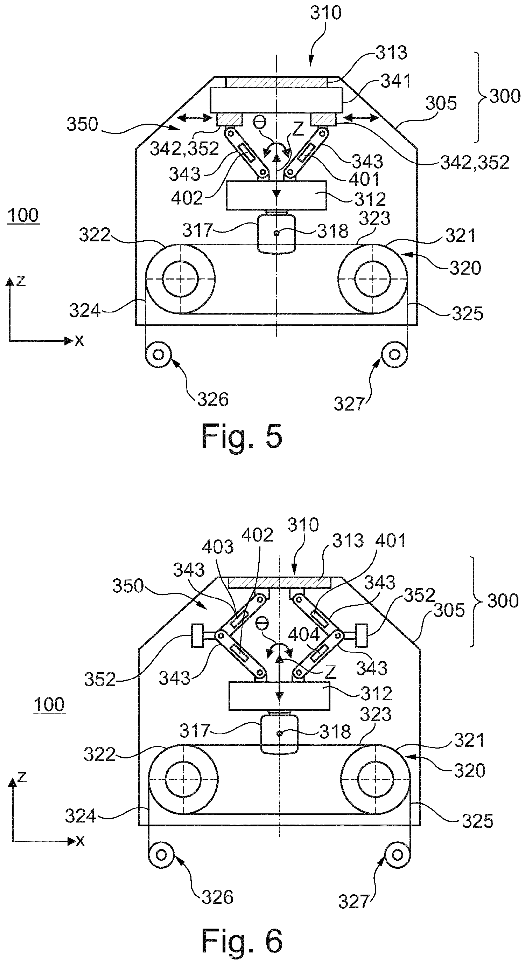

Therefore, embodiments described herein, with exemplary reference to Fig.5, provide a wire saw 100 including an ingot feeding system 300 which is capable of measuring a force acting on the ingot 317 during the cutting process. In particular, the ingot positioning includes a kinematic mechanism structure 350, at least one actuator 352 for moving at least one part of the kinematic mechanism structure, a support table 312 for coupling an ingot to the kinematic mechanism structure; and sensors 401, 402 for measuring force acting on the kinematic mechanism structure 350. Hence, information about the force transmitted to the ingot via the cutting wires during the cutting process can be obtained by measuring the force acting on the kinematic mechanism structure.

According to typical embodiments described herein, this information may further be employed for force feedback control of cutting process parameters during cutting to ensure constant and reproducible cutting results.

Therefore, a force based control algorithm enabling a closed loop cutting process control may be used. Thereby, according to embodiments described herein the cutting force during the complete cutting process can be controlled according to a selectable force profile as a function of a position of the ingot and/or time progress of the cutting process.

For example, the cutting force can be controlled such that it remains essentially constant throughout the whole cutting process. Alternatively, the cutting process may be controlled such that for example the cutting force increases or decreases as the wires of the wire saw advance through the ingot. Furthermore, according to embodiments described herein the cutting force can be controlled as a function of at least one cutting process parameter such as an ingot position, an ingot orientation, an ingot feeding speed, a wire speed, a wire temperature, a wire tension, a coolant supply rate, and a coolant temperature. Further, the measured force acting on the ingot can also be used as input for a wire saw control system which is configured to control the wire tension. Typically, the embodiments of the wire saw can include further sensors for measuring cutting process parameters, e.g. a temperature sensor for measuring the temperature of the wire and the like.

Alternatively, according to embodiments, data acquired by a bow measurement system can be used for controlling the cutting force during cutting. Typically, the bow measurement system is configured to measure and monitor a bow of a wire portion within the piece to be sawed. According to embodiments, the bow measurement system is connected to the controller for controlling a cutting process parameter. Typically, the controller employs the bow measurement data for controlling the cutting force, which can be controlled as a function of at least one cutting process parameter such as an ingot position, an ingot orientation, an ingot feeding speed, a wire speed, a wire temperature, a wire tension, a coolant supply rate, and a coolant temperature.

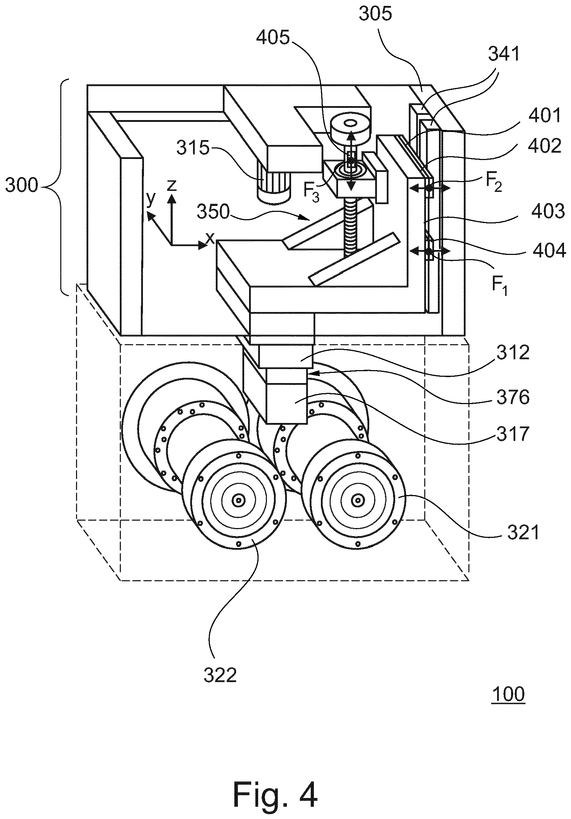

Fig. 4 shows a perspective view of a wire saw device including an ingot feeding system according to embodiments described herein. As exemplarily shown in Fig. 4, the feeding system 300 includes a linear kinematic mechanism structure 350, a motor 315 acting as actuator for creation of a linear motion via the kinematic mechanism structure 350, and multiple sensors 401, 402. 403, 404, 405 for measuring a force acting on the kinematic mechanism structure. Typically, the force acting on the kinematic mechanism structure results from a transmission of a force acting on an ingot 317 into the kinematic mechanism structure during cutting. The ingot is coupled to the kinematic mechanism structure 350 by mounting the ingot on a support table 312 by means of a temporary support, such as the mounting plate 376.

As shown in Fig. 4 the linear kinematic mechanism structure 350 is based on a screw principle. In particular the motor 315 is arranged such that a screw shaft of the kinematic mechanism structure can be driven. As exemplarily shown in Fig. 4 the screw shaft engages with a corresponding nut which is connected to a further element of the kinematic mechanism structure, wherein the further element is arranged such that it can move in a linear direction. Typically, as depicted in Fig. 4, the further element is configured as an elbow element. The elbow element is connected to the frame of the wire saw such that a translational movement, typically along the axis of the cutting direction can be realized, typically a vertical movement. Typically, the connection between the elbow element and the frame is realized by using a slide mechanism.

Generally guide rails may be attached to the frame 305 of the wire saw and corresponding slide elements (not shown) attached to the further element of the kinematic mechanism structure, e.g. the elbow element. They are typically employed for realizing a guided movement of the kinematic mechanism structure along the axis of the cutting direction. Typically, at least two guide rails and at least two slide elements, typically four slide elements, are used. As exemplarily shown in Fig. 4, typically the guide rails are arranged parallel in cutting direction. Typically, the screw shaft and the slide elements are provided with sensors 401, 402, 403, 404, 405 for measuring a force, in particular the force components of a force, acting on the kinematic mechanism structure. Typically, part of the sensors provided on the slide elements are arranged and configured for measuring a horizontal force component, exemplarily illustrated by F₁ and F₂, of the force acting on the kinematic mechanism structure during cutting. Correspondingly, typically at least one sensor, such as the sensor 405 illustrated in Fig. 4, arranged and configured for measuring a vertical force component of the force, exemplarily illustrated by F₃, acting on the kinematic mechanism structure during cutting. According to the embodiment as shown in Fig. 4 the sensor for measuring a vertical force is provided on the screw shaft. Although, not specifically shown in Fig.4 the sensors may be arranged on other positions of the kinematic mechanism structure which are suitable for measuring vertical and horizontal force components of a force acting on the kinematic mechanism structure during cutting. For example, forces sensors may be provided on the support table 312 and/ or the mounting plate 376 and/ or the guide rails.

Fig. 5 shows a side view of a wire saw device including an ingot feeding system 300 according to embodiments described herein. The ingot feeding system 300 includes a parallel kinematic mechanism structure 350 having at least one guide rail 341, at least two arms 343 having first ends and second ends, and one or more actuators 352, such as the two linear motors 342 shown, which are configured to realize a movement along the at least one guide rail 341 (indicated by the arrows below the actuators).

According to embodiments, as exemplarily shown in Fig. 5, the kinematic mechanism structure is a parallel kinematic mechanism structure, including at least two arms, wherein each arm 343 includes a first end and a second end.

The effect of an ingot positioning system, including a parallel kinematic mechanism structure according to the embodiments described herein, is that it enables a translational movement of the ingot within a cutting plane and a rotational movement around a rotational axis which typically is perpendicular to the cutting plane. Thereby, flexibility of the cutting process with respect to starting and/or finishing conditions, such as orientation of the ingot relative to the wires of the wire saw can be provided. Further, the cutting length i.e. the contact length of the wire with the ingot can be controlled. In particular, the contact length of the wire with the ingot can be controlled by positioning, e.g. rotating the ingot, as a function of force acting on the ingot as measured in the kinematic mechanism structure during cutting.

According to embodiments, the kinematic mechanism structure is configured to enable at least a translational movement of the ingot within a cutting plane. Typically, the cutting plane includes a cutting direction. Alternatively, the kinematic mechanism structure is configured to enable a translational movement and/or a rotational movement. Typically the rotational movement is carried out around a rotational axis which is perpendicular to the cutting plane. Typically, the orientation of the cutting plane remains constant throughout the complete cutting process. Typically, the orientation of the cutting plane corresponds to the orientation of the wires of the wire saw.

According to embodiments described herein, the rotational axis may be located within the ingot. Alternatively, the rotational axis may be located outside the ingot e.g. when a rocking movement of the ingot is performed by the kinematic mechanism structure. According to embodiments, the location of the rotational axis being perpendicular to the cutting plane can change during the cutting process. According to other typical embodiments described herein, the kinematic mechanism structure is configured to enable two rotational movements around two rotational axis, which are typically perpendicular to the cutting plane. For instance a first rotational movement around a first rotational axis located outside the ingot, for example in case of a rocking movement of the ingot, and a second rotational movement around a second rotational axis located within the ingot, for example in case of pivoting or spinning the ingot.

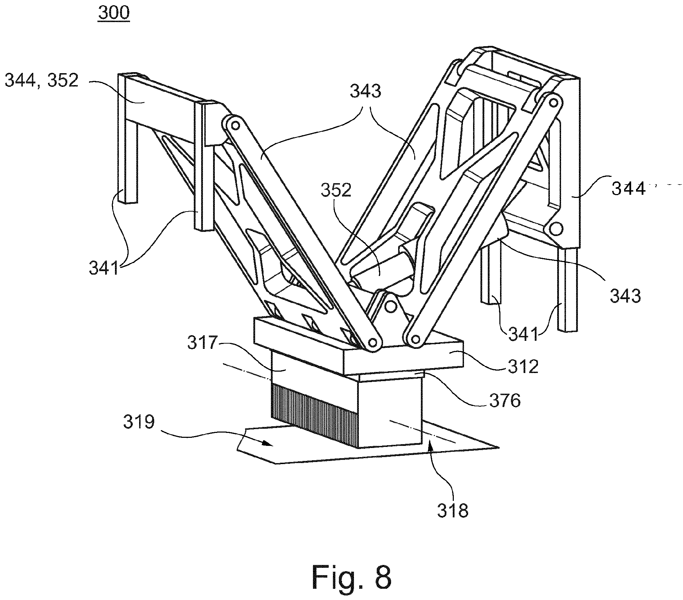

According to embodiments, the at least two arms are arranged on opposite sides with respect to the rotational axis, wherein the first ends of the at least two arms are connected to the support table via a hinged joint, as exemplarily shown in Fig. 5. Typically, although not shown in Fig. 5, according to embodiments described herein, the kinematic mechanism structure further includes at least one slide, wherein the second ends of the at least two arms are typically connected to the at least one slide via a hinged joint. According to embodiments described herein, the slide is guided via rails, as exemplarily shown in Fig.8.

Typically, the actuators are configured such that each can move separately along the at least one guide rail 341. Typically, as depicted in Fig. 5, the first ends of the at least two arms 343 are rotatably connected to the support table 312, e.g. via a hinged joint, whereas the second ends of the at least two arms 343 are rotatably connected to the actuators 352, e.g. via a hinged joint. Hence, by moving the actuators, the arms 343, the support table 312 and thus the ingot 317 connected to the support table, e.g. by the mounting plate 376, can be moved. For example, when both actuators are moving towards the center the ingot is urged downwards in the representation of Fig. 5, in particular towards the wires of the wire saw. In case that both actuators are moving towards the center with the same speed, a pure translational movement in cutting direction can be realized. Correspondingly, in the case that one actuator of the two actuators moves faster or slower compared to the other actuator, a rotational movement of the ingot can be realized, e.g. a rotation with an angle θ as shown in Fig. 5. Accordingly, a relative motion of the actuators 352 to each other and to the rail 341 can be used to move the ingot 317 in the Z-direction and/or also to provide a tilt of the ingot 317, e.g. with an angle relative to the layer of wires 323. The ability to vary the angle θ of the ingot 317, or tilt to the ingot 317, relative to the wire(s) 323 during the initial stages of the sawing process can be relevant to allow the slots 332 (see Fig. 3) to be evenly formed across the ingot 317. In contrast, urging the full surface of the ingot against the wires 323 at once can cause the wires to shift out of wire guiding grooves formed on the wire guides 321,322 and/or to break.

Further, by moving at least one of the two actuators back and forth, a rocking movement of ingot can be realized. Typically, a rocking movement is a movement which includes a rotational movement, wherein the axis of rotation typically lies inside or outside the object being rocked and wherein the axis of rotation may change during the rocking movement. Typically, a rocking movement is a back and forth movement along a trajectory

According to typical embodiments, the parallel kinematic mechanism structure 350, such as shown in Fig. 5, is capable of positioning an ingot within a plane including the cutting direction, for example, a positioning within a vertical plane such as an x-z-plane as depicted in Fig. 5. Alternatively, the plane including the cutting direction being oriented parallel to the orientation of the wires 323. Further, similar to the embodiments of the feeding system shown in Figs. 2 and 5, the embodiment of the feeding system of Fig. 5 includes at least two sensors for measuring a force acting on the kinematic mechanism structure during cutting wafers.

Typically, the sensors are provided on the arms 343 of the parallel kinematic mechanism structure. Typically, some of the sensors, for instance the sensors 401 and 402, are configured and arranged such that a force transmitted into the arms 343 can be measured. Typically, as the arms 343 are rotatably connected on their first and second ends, the direction of the force transmitted into the arms is substantially only in the direction of the longitudinal extension of the arms 343.

Although, not specifically shown in Fig. 5 the sensors may be arranged on other positions of the kinematic mechanism structure which are suitable for measuring vertical and horizontal force components of a force acting on the kinematic mechanism structure during wafer cutting. For example, force sensors may be provided on the support table 312 and/ or the mounting plate 376 and/ or the guide rail 341.

Fig. 6 shows a side view of a wire saw device illustrating further embodiments of the ingot feeding system 300. Compared to the embodiment as shown in Fig. 5, the embodiment of Fig. 6 differs in that the ingot feeding system 350 includes two "two-bar linkages" of bars 343 that are coupled to a base plate 313. Further, one or more actuators 352 are provided, which are configured to move each of the two-bar linkages separately. Typically, as depicted in Fig. 6, the actuators act on an inner articulation of the two-bar linkages. Typically, each first end of the two "two-bar linkages" is rotatably connected to the support table 312, e.g. via a hinged joint, whereas each second end of the two "two-bar linkages" is rotatably connected to the base plate 313, e.g. via a hinged joint. Hence, by creating a movement of the inner articulation of two-bar linkages by the actuators, the support table 312 and thus the ingot 317 connected to the support table, e.g. by the mounting plate 376, can be moved. For example, when both actuators are creating a movement of the inner articulation of two-bar linkages towards the center, the ingot is urged downwards in the representation of Fig. 6, in particular towards the wires of the wire saw. In the case that both actuators are creating a movement of the inner articulations of the two two-bar linkages towards the center with the same speed, a pure translational movement in cutting direction can be realized. Correspondingly, in case that one actuator of the two actuators moves faster or slower compared to the other actuator, a rotational movement of the ingot can be realized, e.g. a rotation with an angle θ as shown in Fig. 6. Accordingly, the relative motion of the two-bar linkages due to the motion applied by each actuator 352 can be used to move the ingot 317 in the Z-direction and also provide a tilt to the ingot 317 relative to the layer 319 of wires 323, which can be relevant as exemplarily discussed in connection with the embodiment shown in Fig. 5.

Further, similar to other embodiments of the feeding system described herein, the embodiment of the feeding system as illustrated in Fig. 6 includes sensors 401, 402, 403, 404 for measuring a force acting on the kinematic mechanism structure during cutting wafers. Typically, the sensors are provided on each arm 343 of the two "two-bar linkages" of the parallel kinematic mechanism structure. Typically, the sensors are configured and arranged such that a force transmitted into the arms 343 can be measured. Although not specifically shown in Fig.6, the sensors may be arranged at other positions of the kinematic mechanism structure which are suitable for measuring vertical and horizontal force components of a force acting on the kinematic mechanism structure during wafer cutting. For example, force sensors may be provided on the support table 312 and/ or the mounting plate 376 and/ or the base plate 313.

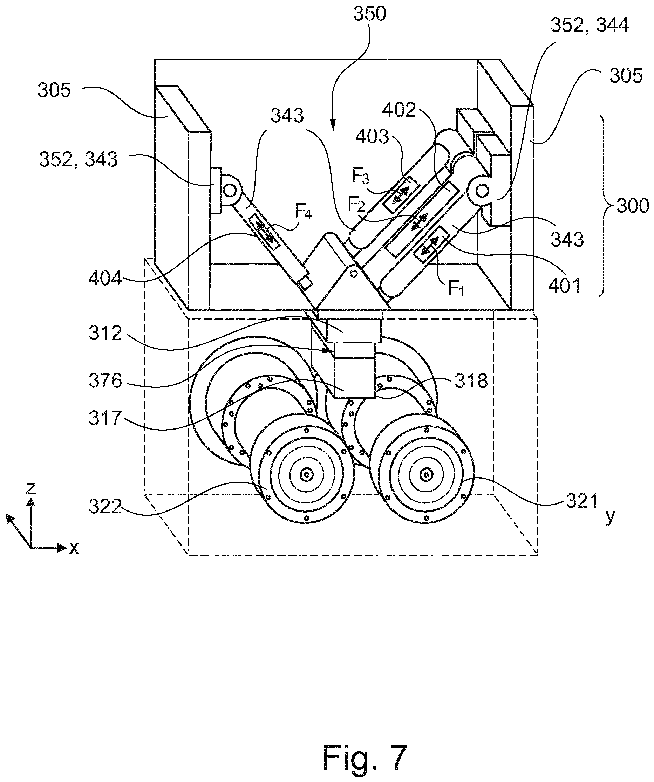

Fig. 7 shows a perspective view of a wire saw device 100 including a further embodiment of the ingot feeding system 300. As exemplarily shown in Fig. 7 the feeding system 300 includes a parallel kinematic mechanism structure 350, three arms 343 having first ends and second ends, and two or more actuators 352. As illustrated in Fig. 7 the first ends of the arms are rotatably connected to the support table 312, e.g. via a hinged joint, whereas the second ends of the arms are rotatably connected to the actuators 352, e.g. via a hinged joint. According to embodiments not shown, the parallel kinematic mechanism structure may include four arms, wherein two arms are arranged on a left side of the support table and the other two arms are arranged on the right side of the support table.

Typically the actuators are configured to realize a movement along a translational axis, typically a vertical axis. Typically, the actuators are guided via guide rails (not shown) provided on the frame 305 of the wire saw, wherein the guide rails are typically arranged along an axis of the cutting direction, particularly in a vertical direction. Further, the actuators are configured such that each can move separately. Hence, by moving the actuators 352, the arms 343, the support table 312 and thus the ingot 317 connected to the support table can be moved, e.g. by the mounting plate 376.

For example, when all three actuators are moving in the same direction with the same speed the ingot is urged downwards in the representation of Fig. 7, in particular towards the wires of the wire saw, typically along an axis of the cutting direction. In the case that at least one of the actuators is moving at a different speed and/ or in a different direction compared to the other actuators, a rotational movement of the ingot can be realized, e.g. a rotation similar to that as with the embodiments as shown in Figs. 5 and 6. Accordingly, a relative motion of the actuators to each other and to the rails can be used to move the ingot 317 in a cutting plane, for example in the z-x-plane of Fig. 7, and/or also to provide a tilt of the ingot 317, e.g. with an angle relative to the layer of wires 323, which can be relevant as exemplarily discussed in connection with the embodiment shown in Fig. 5.

Furthermore, as shown in Fig. 7, the supporting table typically includes a prisma-like part, wherein a rectangular surface of the prisma-like part forms a base portion, which typically includes the mounting plate 376 and a tip portion located opposite to the base portion. Typically, one of the three arms 343 is rotatably connected to the tip portion of the prisma-like part, wherein the other two arms are rotatably connected to the base portion of the prisma-like part, in particular on opposite sides of the base portion, as illustrated in Fig. 7. Typically, one of the two arms rotatably connected to the base portion of the prisma-like part has an increased lateral extension compared to the other arm rotatably connected to the base portion on the opposite side. Thereby, a higher stiffness of the kinematic mechanism structure can be realized.

Further, similar to other embodiments of the feeding system described herein, the embodiment of the feeding system as illustrated in Fig. 7 includes sensors 401, 402, 403, 404 for measuring a force acting on the kinematic mechanism structure during cutting wafers. Typically, part of the sensors, such as the sensors 401 and 402 depicted in Fig. 7, can be provided on each arm 343 of the parallel kinematic mechanism structure. Alternatively, the sensors 401, 402, 403, 404 are configured and arranged such that a force transmitted into the arms 343 can be measured, as exemplarily illustrated by F₁, F₂ and F₃. In an embodiment as shown in Fig. 7, in which one of the two arms rotatably connected to the base portion of the prisma-like part has an increased lateral extension compared to the other arm rotatably connected to the base portion on the opposite side, the arm having the increased lateral extension typically includes two or more sensors. Although not specifically shown in Fig. 7, the sensors may be arranged on other positions of the kinematic mechanism structure which are suitable for measuring vertical and horizontal force components of a force acting on the kinematic mechanism structure during wafer cutting. For example, force sensors may be provided on the support table 312 and/ or the mounting plate 376.

Fig. 8 shows a perspective view of an ingot feeding system according to embodiments. As shown in Fig. 8 the feeding system 300 includes a parallel kinematic mechanism structure 350, three arms 343 having first ends and second ends, and two or more actuators 352. According to the embodiment of Fig. 8, two arms are configured as a frame structure and the other arm as an expanding/contracting arm. Typically, as illustrated in Fig.8 the first ends of the arms 343 are rotatably connected to the support table 312, e.g. via a hinged joint, whereas the second ends of the arms 343 are rotatably connected to a slide, typically via a hinged joint.

Typically, the slides are provided with actuators which are configured to realize a movement along a translational axis, typically a vertical axis. Typically, the actuators are guided via guide rails 341 provided on the frame 305 of the wire saw, wherein the guide rails are typically arranged along an axis of the cutting direction, particularly in a vertical direction. Further, the actuators are configured such that each can move separately. Hence, by moving the actuators 352 the arms 343, the support table 312 and thus the ingot 317 connected to the support table, e.g. by the mounting plate 376, can be moved. For example, when the slide actuators (not shown) are moving the slides in the same direction with the same speed, e.g. referring to Fig 8 downwards or upwards, the ingot can be urged towards the wires or moved upwards away from the wires of the wire saw, respectively. In case that at least one of the slide-actuators is moving at a different speed and/ or in a different direction compared to the other slide-actuator, a rotational movement of the ingot can be realized, e.g. a rotation similar to that as described with respect to the embodiments shown in Figs. 5 -7. Accordingly, a relative motion of the slide-actuators to each other and to the rails can be used to move the ingot 317 in a cutting plane and/or also to provide a tilt of the ingot 317, e.g. with an angle relative to the layer of wires 323, which can be relevant as exemplarily discussed in connection with the embodiment shown in Fig. 5.

Furthermore, according to an embodiment of a feeding system as illustrated in Fig.8 the expanding/contracting arm includes an actuator capable of expanding and contracting the expanding/contracting arm. Thereby, also a rotational movement of the ingot can be realized by simple expansion or contraction of expanding/contracting arm. Typically, the expanding/contracting arm is used for tilting or spinning the ingot.

Further, the embodiment of the feeding system as illustrated in Fig. 8 includes sensors (not shown) for measuring a force acting on the kinematic mechanism structure during cutting an ingot. Typically, the sensors are provided on each arm of the parallel kinematic mechanism structure. Typically, the sensors are configured and arranged such that a force transmitted into the arms can be measured. In an embodiment as shown in Fig. 8, in which two arms having a frame structure are provided, typically two or more force sensors are arranged on each frame structure. However, force sensors may be arranged on other positions of the kinematic mechanism structure, shown in Fig. 8, which are suitable for measuring vertical and horizontal force components of a force acting on the kinematic mechanism structure during wafer cutting. Additionally, force sensors may be provided on the support table 312 and/ or the mounting plate 376.

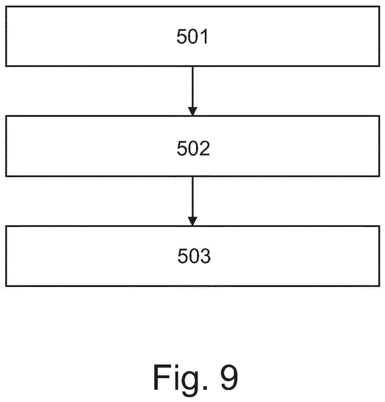

Fig. 9 shows an embodiment of a method for feeding an ingot during cutting. Typically the method for feeding an ingot during cutting includes: feeding 501 an ingot to a wire saw by use of a kinematic mechanism structure; monitoring 502 a force acting on the ingot during cutting by measuring the force in the kinematic mechanism structure; controlling 503 at least one cutting process parameter based on the monitored force. Typically, a feeding system according to the embodiments described herein is used to carry out typical embodiments of the method for feeding an ingot during cutting. Generally, feeding an ingot to a wire saw includes urging the ingot towards the wires of the wire saw.

According to the embodiments of the method for feeding an ingot during cutting, in particular wafer cutting, feeding the ingot to the wire saw includes an alternating movement of the ingot, in particular a rocking movement.

Furthermore, according to embodiments of the method for feeding an ingot during cutting, monitoring a force acting on the ingot includes measuring the force based on a signal generated by at least one sensor or by at least one actuator. Typically, the generated signal is transmitted to a controller for controlling a cutting process parameter by use of a force feedback control. Typically, the transmitted signal is processed by the controller for computing the respective force measurement data. Typically real-time online monitoring of a force acting on the kinematic mechanism structure and thus real-time online monitoring of a force acting on the ingot during the sawing process is performed by the controller.

According to embodiments of the method for feeding an ingot during cutting, the controlling of at least one cutting process parameter includes a closed loop control. Typically, the at least one cutting process parameter includes an ingot position and/or an ingot orientation and/or an ingot feeding speed and/or a wire speed and/or a wire temperature and/or a wire tension and/or a coolant supply rate, or a coolant temperature.

## Claims

1. An ingot feeding system (300) for a wire saw device (100), comprising:
a kinematic mechanism structure (350);
at least one actuator (352) for moving at least one part of the kinematic mechanism structure (350);
a support table (312) for coupling an ingot (317) to the kinematic mechanism structure (350);
wherein the kinematic mechanism structure (350) is configured to enable a translational movement of the ingot (317) within a cutting plane, wherein the cutting plane includes a cutting direction (Z),
**characterized in that** the ingot feeding system (300) comprises at least two sensors (401, 402, 403, 404, 405) for measuring a force acting on the kinematic mechanism structure (350), the kinematic mechanism structure (350) being further configured to enable a rotational movements (θ) around a rotational axis (318) which is perpendicular to the cutting plane.

2. The ingot feeding system (300) according to claim 1, wherein the feeding system further comprises a controller for at least one of controlling a cutting process parameter by use of a force feedback control and monitoring the force acting on the kinematic mechanism structure (350).

3. The ingot feeding system (300) according to claim 2, wherein the cutting process parameter includes at least one of a position of the ingot (317), an ingot feeding speed, a wire speed, a coolant supply and a coolant temperature.

4. The ingot feeding system (300) according to any of claims 1 to 3, wherein the at least two sensors (401,402, 403, 404, 405) are force sensors, in particular strain gauge sensors.

5. The ingot feeding system (300) according to any of claim 1 to 4, wherein the kinematic mechanism structure (350) is a parallel kinematic mechanism structure, comprising at least two arms (343) wherein each arm includes a first end and a second end.

6. The ingot feeding system (300) according to claim 5, wherein the at least two arms (343) are arranged on opposite sides with respect to the rotational axis (318), wherein the first ends of the at least two arms (343) are connected to the support table (312) via a hinged joint.

7. The ingot feeding system (300) according to any of claims 1 to 6, wherein the kinematic mechanism structure further comprises at least one slide (344), wherein the second ends of the at least two arms (343) are preferably connected to the at least one slide (344) via a hinged joint.

8. The ingot feeding system (300) according to claim 7, wherein the slide (344) is guided via rails (341).

9. A wire saw device (100) comprising at least two wire guide cylinders (321, 322) and an ingot feeding system (300) according to any of claims 1 to 8.

10. A method for feeding an ingot, wherein the method comprises:
a) feeding (501) an ingot to a wire saw by use of a kinematic mechanism structure, wherein the kinematic mechanism structure (350) is configured to enable a translational movement of the ingot (317) within a cutting plane, wherein the cutting plane includes a cutting direction (Z), and a rotational movement (θ) around a rotational axis (318) which is perpendicular to the cutting plane;
b) monitoring (502) a force acting on the ingot during cutting by measuring the force in the kinematic mechanism structure;
c) controlling (503) at least one cutting process parameter based on the monitored force.

11. The method for feeding an ingot according to claim 10, wherein feeding the ingot to the wire saw includes an alternating movement of the ingot, in particular a rocking movement.

12. The method for feeding an ingot according to claim 10 or 11, wherein monitoring a force acting on the ingot includes measuring the force based on a signal generated by at least two sensors or by at least one actuator.

13. The method for feeding an ingot according to any of claims 10 to 12, wherein the controlling of at least one cutting process parameter includes a closed loop control.

14. The method for feeding an ingot according to any of claims 10 to 13, wherein the at least one cutting process parameter includes at least one of positioning of the ingot relative to a plane perpendicular to a cutting direction during cutting, controlling an ingot feeding speed, controlling a wire speed, controlling a coolant supply and controlling a coolant temperature.

## Patentansprüche

1. Blockzuführsystem (300) für eine Drahtsägevorrichtung (100), umfassend:
eine kinematische Mechanismusstruktur (350);
mindestens einen Aktuator (352) zum Bewegen mindestens eines Teils der kinematischen Mechanismusstruktur (350);
einen Trägertisch (312) zum Koppeln eines Blocks (317) mit der kinematischen Mechanismusstruktur (350);
wobei die kinematische Mechanismusstruktur (350) konfiguriert ist, eine Translationsbewegung des Blocks (317) in einer Schneidebene zu ermöglichen, wobei die Schneidebene eine Schneidrichtung (Z) aufweist,
**dadurch gekennzeichnet, dass** das Blockzuführsystem (300) mindestens zwei Sensoren (401, 402, 403, 404, 405) zum Messen einer Kraft umfasst, die auf die kinematische Mechanismusstruktur (350) einwirkt, wobei die kinematische Mechanismusstruktur (350) ferner konfiguriert ist, eine Drehbewegung (θ) um eine Drehachse (318) zu ermöglichen, die senkrecht zu der Schneidebene ist.

2. Blockzuführsystem (300) nach Anspruch 1, wobei das Zuführsystem ferner eine Steuerung für mindestens eines des Steuerns eines Schneidprozessparameters durch Verwendung einer Kraftrückmeldungssteuerung und des Überwachens der Kraft, die auf die kinematische Mechanismusstruktur (350) einwirkt, umfasst.

3. Blockzuführsystem (300) nach Anspruch 2, wobei der Schneidprozessparameter mindestens eine einer Position des Blocks (317), einer Blockzuführgeschwindigkeit, einer Drahtgeschwindigkeit, einer Kühlmittelzufuhr und einer Kühlmitteltemperatur beinhaltet.

4. Blockzuführsystem (300) nach einem der Ansprüche 1 bis 3, wobei die mindestens zwei Sensoren (401, 402, 403, 404, 405) Kraftsensoren, insbesondere Dehnungsmesssensoren sind.

5. Blockzuführsystem (300) nach einem der Ansprüche 1 bis 4, wobei die kinematische Mechanismusstruktur (350) eine parallele kinematische Mechanismusstruktur ist, die mindestens zwei Arme (343) umfasst, wobei jeder Arm ein erstes Ende und ein zweites Ende aufweist.

6. Blockzuführsystem (300) nach Anspruch 5, wobei die mindestens zwei Arme (343) auf gegenüberliegenden Seiten in Bezug auf die Drehachse (318) angeordnet sind, wobei die ersten Enden der mindestens zwei Arme (343) mit dem Trägertisch (312) über ein Scharniergelenk verbunden sind.

7. Blockzuführsystem (300) nach einem der Ansprüche 1 bis 6, wobei die kinematische Mechanismusstruktur ferner mindestens einen Schieber (344) umfasst, wobei die zweiten Enden der mindestens zwei Arme (343) vorzugsweise mit dem mindestens einen Schieber (344) durch ein Scharniergelenk verbunden sind.

8. Blockzuführsystem (300) nach Anspruch 7, wobei der Schieber (344) durch Schienen (341) geführt wird.

9. Drahtsägevorrichtung (100), umfassend mindestens zwei Drahtführungszylinder (321, 322) und ein Blockzuführsystem (300) nach einem der Ansprüche 1 bis 8.

10. Verfahren zum Zuführen eines Blocks, wobei das Verfahren Folgendes umfasst:
a) Zuführen (501) eines Blocks zu einer Drahtsäge durch Verwenden einer kinematischen Mechanismusstruktur, wobei die kinematische Mechanismusstruktur (350) konfiguriert ist, eine Translationsbewegung des Blocks (317) innerhalb einer Schneidebene zu ermöglichen, wobei die Schneidebene eine Schneidrichtung (Z) und eine Drehbewegung (θ) um eine Drehachse (318) aufweist, die senkrecht zu der Schneidebene ist;
b) Überwachen (502) einer Kraft, die auf den Block während des Schneidens einwirkt, durch Messen der Kraft in der kinematischen Mechanismusstruktur;
c) Steuern (503) mindestens eines Schneidprozessparameters basierend auf der überwachten Kraft.

11. Verfahren zum Zuführen eines Blocks nach Anspruch 10, wobei das Zuführen des Blocks zur Drahtsäge eine alternierende Bewegung des Blocks, insbesondere eine Schaukelbewegung beinhaltet.

12. Verfahren zum Zuführen eines Blocks nach Anspruch 10 oder 11, wobei das Überwachen einer Kraft, die auf den Block einwirkt, das Messen der Kraft basierend auf einem Signal, das von mindestens zwei Sensoren oder von mindestens einem Aktuator erzeugt wird, beinhaltet.

13. Verfahren zum Zuführen eines Blocks nach einem der Ansprüche 10 bis 12, wobei das Steuern mindestens eines Schneidprozessparameters eine Steuerung mit geschlossenem Regelkreis beinhaltet.

14. Verfahren zum Zuführen eines Blocks nach einem der Ansprüche 10 bis 13, wobei der mindestens eine Schneidprozessparameter mindestens eines des Positionierens des Blocks in Bezug auf eine Ebene, die senkrecht zu einer Schneidebene während des Schneidens ist, des Steuerns einer Blockzuführgeschwindigkeit, des Steuerns einer Drahtgeschwindigkeit, des Steuerns einer Kühlmittelzufuhr und des Steuerns einer Kühlmitteltemperatur beinhaltet.

## Revendications

1. Système d'alimentation de lingots (300) pour un dispositif de scie à fil (100), comprenant :
une structure de mécanisme cinématique (350) ;
au moins un actionneur (352) destiné à déplacer au moins une partie de la structure de mécanisme cinématique (350) ;
une table de support (312) destiné à accoupler un lingot (317) à la structure de mécanisme cinématique (350) ;
dans lequel la structure de mécanisme cinématique (350) est configurée pour permettre un mouvement de translation du lingot (317) dans un plan de coupe, le plan de coupe comprenant une direction de coupe (Z),
**caractérisé en ce que** le système d'alimentation de lingots (300) comprend au moins deux capteurs (401, 402, 403, 404, 405) destinés à mesurer une force agissant sur la structure de mécanisme cinématique (350), la structure de mécanisme cinématique (350) étant en outre configurée pour permettre un mouvement de rotation (θ) autour d'un axe de rotation (318) perpendiculaire au plan de coupe.

2. Système d'alimentation de lingots (300) selon la revendication 1, dans lequel le système d'alimentation comprend un dispositif de commande permettant au moins de commander un paramètre de procédé de coupe à l'aide d'une commande de retour de force et/ou de surveiller la force agissant sur la structure de mécanisme cinématique (350).

3. Système d'alimentation de lingots (300) selon la revendication 2, dans lequel le paramètre de procédé de coupe comprend au moins l'un parmi une position du lingot (317), une vitesse d'alimentation de lingot, une vitesse de fil, une alimentation en liquide de refroidissement et une température de liquide de refroidissement.

4. Système d'alimentation de lingots (300) selon l'une quelconque des revendications 1 à 3, dans lequel les au moins deux capteurs (401, 402, 403, 404, 405) sont des capteurs de force, en particulier des capteurs à jauge de contrainte.

5. Système d'alimentation de lingots (300) selon l'une quelconque des revendications 1 à 4, dans lequel la structure de mécanisme cinématique (350) est une structure de mécanisme cinématique parallèle comprenant au moins deux bras (343), chaque bras comprenant une première extrémité et une deuxième extrémité.

6. Système d'alimentation de lingots (300) selon la revendication 5, dans lequel les au moins deux bras (343) sont disposés sur des côtés opposés par rapport à l'axe de rotation (318), les premières extrémités des au moins deux bras (343) étant reliées à la table de support (312) par le biais d'un joint articulé.

7. Système d'alimentation de lingots (300) selon l'une quelconque des revendications 1 à 6, dans lequel la structure de mécanisme cinématique comprend en outre au moins un coulisseau (344), les deuxièmes extrémités des au moins deux bras (343) étant de préférence reliées à l'au moins un coulisseau (344) par le biais d'un joint articulé.

8. Système d'alimentation de lingots (300) selon la revendication 7, dans lequel le coulisseau (344) est guidé à l'aide de rails (341).

9. Dispositif de scie à fil (100) comprenant au moins deux cylindres de guidage de fil (321, 322) et un système d'alimentation de lingots (300) selon l'une quelconque des revendications 1 à 8.

10. Procédé pour l'alimentation d'un lingot, le procédé comprenant :
a) l'alimentation (501) d'un lingot vers une scie à fil à l'aide d'une structure de mécanisme cinématique, la structure de mécanisme cinématique (350) étant configurée pour permettre un mouvement de translation du lingot (317) dans un plan de coupe, le plan de coupe comprenant une direction de coupe (Z), ainsi qu'un mouvement de rotation (θ) autour d'un axe de rotation (318) perpendiculaire au plan de coupe ;
b) la surveillance (502) d'une force agissant sur le lingot pendant la coupe, en mesurant la force dans la structure de mécanisme cinématique ;
c) la commande (503) d'au moins un paramètre de procédé de coupe basé sur la force surveillée.

11. Procédé pour l'alimentation d'un lingot selon la revendication 10, dans lequel l'alimentation du lingot vers la scie à fil comprend un mouvement de va-et-vient du lingot, en particulier un mouvement d'oscillation.

12. Procédé pour l'alimentation d'un lingot selon la revendication 10 ou 11, dans lequel la surveillance d'une force agissant sur le lingot comprend la mesure de la force à partir d'un signal généré par au moins deux capteurs ou par au moins un actionneur.

13. Procédé pour l'alimentation d'un lingot selon l'une quelconque des revendications 10 à 12, dans lequel la commande d'au moins un paramètre de procédé de coupe comprend une commande en boucle fermée.

14. Procédé pour l'alimentation d'un lingot selon l'une quelconque des revendications 10 à 13, dans lequel l'au moins un paramètre de procédé de coupe comprend au moins l'un parmi le positionnement du lingot par rapport à un plan perpendiculaire à une direction de coupe pendant la coupe, la commande d'une vitesse d'alimentation de lingot, la commande d'une vitesse de fil, la commande d'une alimentation en liquide de refroidissement et la commande d'une température de liquide de refroidissement.
